# EUROPÄISCHE PATENTSCHRIFT

(11) **EP 2 617 619 B1**
(45) Veröffentlichungstag und Bekanntmachung des Hinweises auf die Patenterteilung: **30.10.2019**
(21) Anmeldenummer: 12194937.4
(22) Anmeldetag: 30.11.2012
(51) Int. Cl.: B60W 50/00, B60W 40/02, B60W 50/14, B60W 30/18, G01S 15/93, B60R 16/03

(54) **VERFAHREN ZUR ERFASSUNG DES UMFELDES EINES FAHRZEUGES UND VORRICHTUNG ZUM DURCHFÜHREN DES VERFAHRENS**
METHOD FOR DETECTING THE SURROUNDINGS OF A VEHICLE AND DEVICE FOR CARRYING OUT THE METHOD
PROCÉDÉ DE DÉTECTION DE L'ENVIRONNEMENT D'UN VÉHICULE ET DISPOSITIF D'EXÉCUTION DU PROCÉDÉ

(30) Priorität: 19.01.2012 DE 102012200753
(43) Veröffentlichungstag der Anmeldung: 24.07.2013
(73) Patentinhaber: ROBERT BOSCH GMBH, 70442 Stuttgart (DE)
(72) Erfinder: Schoenherr, Michael, 71272 Renningen-Malmsheim (DE); Gruetzmann, Andreas, 70176 Stuttgart (DE); Schneider, Marcus, 71642 Ludwigsburg (DE)

(56) Entgegenhaltungen:
- DE-A1-102006 038 595
- DE-A1-102007 030 770
- DE-A1-102009 017 910
- DE-A1-102009 028 760
- DE-B4- 10 164 760

## Beschreibung

### Bereich der Erfindung

Die vorliegende Erfindung betrifft ein Verfahren zur Erfassung des Umfeldes eines Fahrzeuges, bei dem zumindest die Objektdaten der mittels mindestens eines Umfeldsensors während der Vorbeifahrt des Fahrzeuges detektierten Objekte in einem ersten Steuergerät erfasst werden. Auch betrifft die Erfindung eine Vorrichtung zum Durchführen des erfindungsgemäßen Verfahrens. Ferner betrifft die Erfindung ein Fahrzeugassistenzsystem, insbesondere ein Flankenschutzsystem, das die erfindungsgemäße Vorrichtung aufweist.

### Stand der Technik

Aus dem Stand der Technik ist beispielsweise ein Flankenschutzsystem bekannt, das den Fahrer warnt, wenn sich das Fahrzeug mit der Fahrzeugflanke einem Objekt nähert. Ein solches Flankenschutzsystem kann die Besonderheit haben, dass auch vor Objekten gewarnt wird, die gar nicht mehr von den Umfelderfassungssensoren gesehen werden beziehungsweise nicht mehr detektierbar sind. Bei einem solchen System wird die Position des Objekts nur während der Vorbeifahrt an dem Objekt mittels eines einzelnen, vorne links und/oder vorne rechts am Fahrzeug angebrachten Sensors erfasst. Wird das Objekt nicht mehr erfasst, so wird die Relativbewegung des Fahrzeugs zum Objekt beispielsweise auf der Basis der Radwegsensoren und des Lenkradwinkels weiterberechnet. Folglich benötigt ein Flankenschutzsystem im einfachsten Fall nur einen Sensor pro Seite, kann aber trotzdem an den Fahrer Warnungen ausgeben, die für die gesamte Fahrzeugflanke gültig sind.

Die Warnungen werden in der Regel mittels einer Mensch-Maschine-Schnittstelle (Human Machine Interface HMI) an den Fahrer ausgegeben. Für Flankenschutzsysteme bieten sich bevorzugt grafische Schnittstellen an, die ein Maß für den Ort neben dem Fahrzeug ausgeben. Solche grafische Schnittstellen können den Fahrer beispielsweise darüber informieren, in welchem Längsbereich oder in welchem Abstand (beispielsweise 60 cm) ein Objekt vorhanden ist, oder ob sich ein Objekt auf der Höhe der Fahrertür befindet.

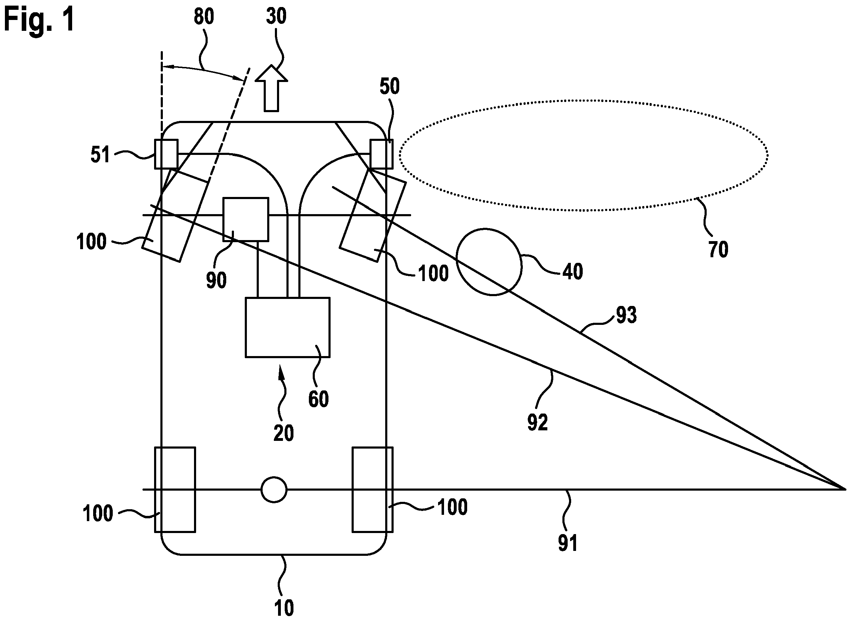

In Figur 1 ist ein Fahrzeug 10 mit einem solchen aus dem Stand der Technik bekannten Flankenschutzsystem 20 dargestellt. Während der Vorbeifahrt 30 des Fahrzeugs 10 an einem Hindernis 40 erfasst ein Sensor 50 das Objekt 40, woraufhin ein angeschlossenes Steuergerät (ECU) 60 die Position des Objekts 40 auch dann noch weiter bestimmt, wenn sich das Objekt 40 gar nicht mehr im Erfassungsbereich 70 des Sensors 50 befindet. Das Steuergerät 60 wertet dazu unter anderem den eingestellten Lenkwinkel 80 und die von den Wegstreckensensoren 90 erhaltene Informationen über mehreren Wegstrecken 91, 92, 93 aus. Das Steuergerät 60 ist auch an einen weiteren Sensor 51 zur Erfassung des Fahrzeugumfeldes angeschlossen. In der Figur 1 sind zur Veranschaulichung auch die Räder 100 des Fahrzeuges 10 zu erkennen.

Aus dem Dokument DE 10 2005 050 576 A1 sind ein Einparkhilfesystem und Einparkhilfeverfahren bekannt, bei denen Parklückeninformationen mittels einer Parklückenvermessungsfunktion ermittelt werden, die mit seitlich am Fahrzeug angebrachten Sensoren die Größe einer Parklücke vermessen, an der das Fahrzeug vorbeifährt. Es ist beschrieben, dass eine Speichereinrichtung vorgesehen sein kann, in der die von der Sensoreinrichtung erzeugten Parklückeninformationen speicherbar sind, damit eine komplett modellbasierte Kollisionswarnung auch dann ausgegeben werden kann, wenn vorhandene Abstandssensoren inaktiv oder defekt sind.

Aus dem Dokument DE 10 2005 011 241 A1 sind ein Verfahren und eine Vorrichtung zur Kollisionswarnung bekannt, bei denen ein Status ermittelt wird, ob ein Objekt im aktuellen Messzyklus gemessen wurde und/oder ein Status ermittelt wird, mit welcher Häufigkeit ein Objekt in aufeinanderfolgenden Messzyklen gemessen wurde. Es ist angegeben, dass eine Historie von stehenden Objekten bewertet wird.

Ferner ist aus dem Dokument DE 10 2004 026 383 B4 ein Kraftfahrzeug mit mindestens einem von einem Prozessor gesteuerten Steuergerät bekannt, bei dem für das Steuergerät ein Sicherungsmodus vorgesehen ist, in welchem innerhalb einer bestimmten Zeit vor dem Abschaltvorgang des Steuergeräts eine Sicherung der Daten des Steuergerätes, insbesondere des Prozessors erfolgt. Es ist angegeben, dass bei einer Vernetzung mehrerer Steuergeräte im Kraftfahrzeug eine zentrale Steuerung der Spannungsversorgung aller vernetzten Steuergeräte auch von einer zentralen Steuereinheit vorgenommen werden kann. Dabei kann die Spannungsversorgung individuell für einzelne Steuergeräte und/oder für einzelne Gruppen von Steuergeräten und/oder für mehrere Gruppen von Steuergeräten gleichartig oder jeweils unterschiedlich vorgegeben werden.

Nachteilig bei den vorgenannten Systemen ist, dass erfassten Objektdaten nach dem Ausschalten der Zündung eines Fahrzeuges den Systemen nicht mehr zur Verfügung stehen.

Insbesondere bei dem vorgenannten Flankenschutzsystem wird das Steuergerät in der Regel sofort nach dem Ausschalten der Zündung des Fahrzeugs stromlos, da das Steuergerät üblicherweise an der Klemme 15 im Fahrzeug angeschlossen ist. Dabei vergisst das Steuergerät die zuletzt gemessenen Objektpositionen. Wird die Zündung wieder eingeschaltet, so sind die Objektinformationen verloren. Dadurch kann es zu einer Kollision mit seitlich am Fahrzeug vorhandenen Objekten kommen, wenn der Fahrer, der in der Regel das Messprinzip des Systems nicht kennt, annimmt, dass das Flankenschutzsystem auch noch nach einem Zündungszyklus die umgebenden Objekte kennt.

Da das Stromlosschalten sehr schnell geht, hat das Steuergerät des Flankenschutzsystems auch keine Zeit, die letzten Objektpositionen in einem eigenen Festspeicher abzuspeichern, da ein solcher Schreibvorgang einige Zeit in Anspruch nehmen würde. Eine andere Möglichkeit wäre, kontinuierlich die Objektposition in dem Festspeicher der Steuergeräte der Flankenschutzsysteme beispielsweise alle 100 ms zu speichern. Diese Möglichkeit scheidet bei vielen gängigen Steuergeräten (Mikrocontrollern) aus, da der Festspeicher bevorzugt aus Flash-Speichern besteht, welche nur eine begrenzte Anzahl an Schreibvorgängen, teilweise wenige tausende Schreibzyklen, überstehen.

In den Dokumenten DE 10 2009 028760 A2 und DE 10 2007 030770 A1 ist jeweils ein Verfahren zur Erfassung des Umfeldes eines Fahrzeugs offenbart, bei dem zumindest die Objektdaten der mittels mindestens eines Umfeldsensors während der Vorbeifahrt des Fahrzeuges detektierten Objekte in einem ersten Steuergerät erfasst und an ein zweites Steuergerät übertragen werden.

Zudem sind in dem Dokument DE 10 2006 038595 A1 ein Einparkhilfesystem und ein Einparkhilfeverfahren zur Ausgabe von Einparkhinweisen an einen Fahrer eines Fahrzeugs offenbart.

### Offenbarung der Erfindung

Erfindungsgemäß wird ein Verfahren zur Erfassung des Umfeldes eines Fahrzeuges bereitgestellt, bei dem zumindest die Objektdaten der mittels mindestens eines Umfeldsensors während der Vorbeifahrt des Fahrzeuges detektierten Objekte in einem ersten Steuergerät erfasst werden. Dabei werden die erfassten Objektdaten in vorbestimmten Zyklen an ein zweites Steuergerät übertragen. Ferner werden die zuletzt erfassten Objektdaten zumindest beim Abschalten des ersten Steuergerätes in dem zweiten Steuergerät nichtflüchtig weiterhin gespeichert, beim Einschalten der Zündung des Fahrzeuges an das erste Steuergerät zurückübertragen und von dem ersten Steuergerät zur Erfassung des nach dem Einschalten der Zündung vorliegenden Fahrzeugumfeldes ausgewertet.

Ferner wird erfindungsgemäß eine Vorrichtung zur Erfassung des Umfeldes eines Fahrzeuges bereitgestellt, die zum Durchführen eines erfindungsgemäßen Verfahrens ausgebildet ist. Die erfindungsgemäße Vorrichtung umfasst mindestens einen Umfeldsensor zum Detektieren von Objekten in dem Fahrzeugumfeld ein erstes und ein zweites Steuergerät. Das erste Steuergerät ist dazu ausgebildet, zumindest die Objektdaten der mittels des Umfeldsensors während einer Vorbeifahrt des Fahrzeuges detektierten Objekte zu erfassen und in vorbestimmten Zyklen an das zweite Steuergerät zu übertragen. Das zweite Steuergerät ist dazu ausgebildet, die von dem ersten Steuergerät zuletzt erfassten Objektdaten zumindest beim Abschalten des ersten Steuergerätes nichtflüchtig weiter zu speichern und beim Einschalten der Zündung des Fahrzeuges zurück an das erste Steuergerät zu übertragen. Ferner ist das erste Steuergerät weiter dazu ausgebildet, die von dem zweiten Steuergerät beim Einschalten der Zündung zurückübertragenen Objektdaten zur Erfassung des nach dem Einschalten der Zündung vorliegenden Fahrzeugumfeldes auszuwerten.

Die Unteransprüche zeigen bevorzugte Weiterbildungen der Erfindung.

Bei dem erfindungsgemäßen Verfahren werden während ein Fahrzeugassistenzsystem, beispielsweise ein Flankenschutzsystem, aktiv ist, kontinuierlich, beispielsweise alle 100ms, Informationen über die Objekte in der Umgebung des Fahrzeuges von dem üblich vorhandenen Steuergerät (das erste Steuergerät) an ein anderes Steuergerät (das zweite Steuergerät), welches nicht sofort nach dem Ausschalten der Zündung deaktiviert wird, gesendet. Die Informationen über die Objekte in der Fahrzeugumgebung können Informationen über die Position dieser Objekte relativ zur Fahrzeughinterachse und/oder Informationen über die Ausdehnung und/oder die Ausrichtung der Objekte sein. Das zweite Steuergerät (Partnersteuergerät) kann beispielsweise in der Mensch-Maschine-Schnittstelle oder in dem Bordcomputer vorhanden sein.

Das zweite Steuergerät (Partnersteuergerät) merkt sich die Objektinformationen. Im Fall eines an der immer bestromten Klemme (nicht dargestellt) des Fahrzeuges angeschlossenen zweiten Steuergerätes, können die Objektdaten beispielsweise in einem Direktzugriffspeicher (RAM) gespeichert werden. Bei einem zweiten Steuergerät, das erst später nach dem Ausschalten der Zündung abgeschaltet wird, können die Objektdaten beispielsweise in einem Festspeicher gespeichert werden.

Erfindungsgemäß speichert das Partnersteuergerät die zuletzt gemessenen Informationen (wie beispielsweise Objektpositionen) kontinuierlich insbesondere in einer RAM-Variable ab. Beim Abschalten des ersten Steuergerätes werden die Informationen vom Partnersteuergerät nichtflüchtig (beispielsweise im EEPROM) gespeichert.

Das erfindungsgemäße Verfahren ist sehr einfach umsetzbar. Ein übliches Flankenschutzsystem muss nur minimal verändert werden, um das erfindungsgemäße Verfahren durchführen zu können.

Weiterhin vorteilhaft ist, dass der Fahrer die Zündung insbesondere kurzzeitig ausschalten kann und nach dem Wiedereinschalten der Zündung immer noch vor den bisherigen, seitlich am Fahrzeug vorhandenen Objekten gewarnt wird.

Dabei ist es auch vorteilhaft, dass das erste Steuergerät nicht an der immer bestromten Klemme im Fahrzeug betrieben werden muss. Ferner werden auch keine speziellen Speicherbausteine mit hoher zulässiger Schreibzyklenanzahl benötigt.

Bei einer besonders vorteilhaften Ausführungsform der Erfindung wird beim Vorliegen einer einen vorbestimmten Schwellenwert überschreitenden Zeitdauer, in der keine Objektdaten von dem ersten Steuergerät auf das zweite Steuergerät übertragen werden, und/oder anhand eines beim Abschalten des ersten Steuergerätes erzeugten Signals, ein Abschalten des ersten Steuergerät durch das zweite Steuergerät erkannt.

Mit anderen Worten wird das Abschalten des ersten Steuergerät insbesondere daran erkannt, dass für zum Beispiel 300 ms keine Informationen mehr von dem ersten Steuergerät kommen (timeout), oder weil ein an der Klemme 15 vorhandenes Signal "AUS" von einem vorhandenen CAN-Bus gelesen wird.

Wenn die Zündung des Fahrzeuges wieder eingeschaltet wird, sendet das Partnersteuergerät die Objektinformationen zurück an das erste Steuergerät. Das erste Steuergerät übernimmt diese Informationen und nutzt sie wieder zur Warnung.

Insbesondere werden die von dem zweiten Steuergerät nach dem Einschalten der Zündung des Fahrzeuges an das erste Steuergerät zurückgeschickten Objektdaten von Objekten, die aufgrund ihrer berechneten Position mittels des Umfelderfassungssensors detektierbar sein sollten aber nach der Einschalten der Zündung nicht mehr detektierbar sind, verworfen.

Anders ausgedrückt, es ist vorteilhaft, nur zurückgespielte Informationen über derartige Objekte zu verwerfen, die laut ihrer Position von einem Umfelderfassungssensor sichtbar sein sollten, dies aber nach der Zündung nicht mehr sind. Dabei werden in dem Fall, in dem das Fahrzeug lange stand, temporäre Objekte unterdrückt.

Erfindungsgemäß werden beim Vorliegen einer einen zweiten Schwellenwert überschreitenden Zeitdauer zwischen dem Aus- und Einschalten der Zündung, die von dem zweiten Steuergerät an das erste Steuergerät nach dem Einschalten der Zündung des Fahrzeuges zurückgeschickten Objektdaten zur Erfassung des aktuellen Fahrzeugumfeldes nicht mehr verwendet und/oder es wird eine Warnung an den Fahrer ausgegeben.

Anders ausgedrückt, ist es denkbar, die in dem zweiten Steuergerät vorhandenen Objektdaten nicht mehr zu verwenden, wenn eine zu lange Zeit, beispielsweise eine Woche, zwischen der Aus- und Einschalten der Zündung liegt. Dies kann dem Fahrer geeignet mitgeteilt werden, zum Beispiel mittels einer optischen Warnung.

Ferner wird erfindungsgemäß ein Fahrzeugassistenzsystem, wie beispielsweise ein Flankenschutzsystem, mit einer erfindungsgemäßen Vorrichtung zum Durchführen eines erfindungsgemäßen Verfahrens bereitgestellt.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: ein Fahrzeug mit einem Flankenschutzsystem nach dem Stand der Technik, und
- Figur 2: ein Fahrzeug mit einem Flankenschutzsystem nach einer ersten Ausführungsform der Erfindung.

### Ausführungsformen der Erfindung

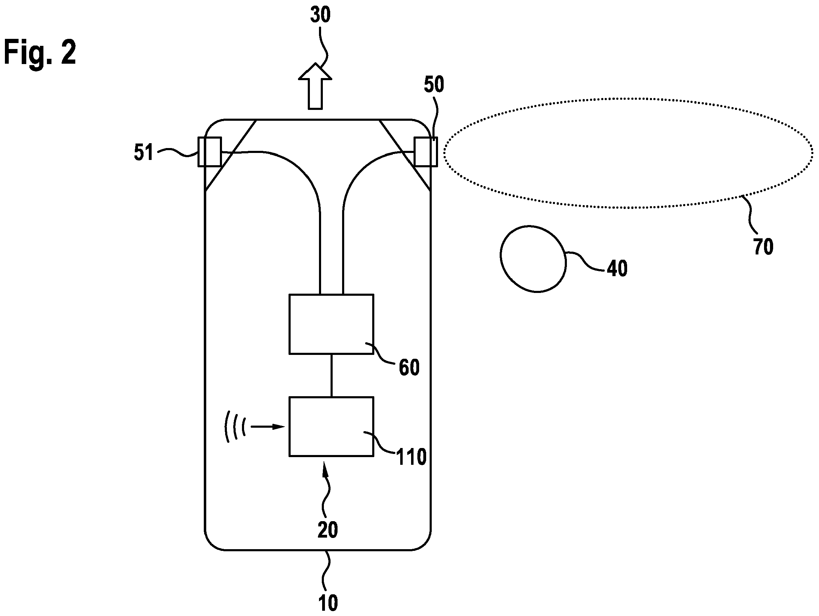

In der Figur 2 ist ein Fahrzeug 10 mit einem Flankenschutzsystem 20 nach einer ersten Ausführungsform der Erfindung dargestellt. Während der Vorbeifahrt 30 des Fahrzeugs 10 an einem Hindernis 40 erfasst ein Sensor 50 das Objekt 40, woraufhin ein erstes angeschlossenes Steuergerät (ECU) 60 die Position des Objekts 40 auch dann noch weiter bestimmt, wenn sich das Objekt 40 gar nicht mehr im Erfassungsbereich 70 des Sensors 50 befindet. Das erste Steuergerät 60 ist auch an einen weiteren Sensor 51 zur Erfassung des Fahrzeugumfeldes angeschlossen.

Das Flankenschutzsystem 20 umfasst ferner ein zweites Steuergerät 110, welches nach dem Abschalten der Zündung noch eine Weile aktiv ist. Das zweite Steuergerät kann sogar an der immer bestromten Klemme (nicht dargestellt) des Fahrzeuges 10 hängen und somit immer bestromt bleiben. Das erste Steuergerät (ECU) 60 sendet während der Zeit, in der die Zündung des Fahrzeuges 10 eingeschaltet ist, kontinuierlich, beispielsweise alle 100 ms, Informationen über Objekte 40 aus der Fahrzeugumgebung an das zweite Steuergerät 110 (Partnersteuergerät). Solche Informationen können beispielsweise Daten über den Ort und/oder die Ausdehnung und/oder die Ausrichtung der Objekte 40 aus der Fahrzeugumgebung und/oder den Zeitpunkt, an dem die vorgenannten Objektdaten erfasst worden sind, umfassen. Das zweite Steuergerät kann insbesondere in der Mensch-Maschine-Schnittstelle (HMI) 111 des Flankenschutzsystems 20 vorhanden sein.

Sobald die Zündung ausgeschaltet wird, vergisst das erste Steuergerät 60 die Informationen über die Objekte 40 aus der Fahrzeugumgebung. Wird die Zündung wieder eingeschaltet, so schickt das Partnersteuergerät 110 die zuvor zwischengespeicherten Objektinformationen wieder zurück an das erste Steuergerät 60. Daraufhin kann das Flankenschutzsystem den Fahrer wieder vor sich seitlich am Fahrzeug 10 befindlichen Objekte 40 warnen, obwohl sie zum Zeitpunkt, an dem die Zündung wieder eingeschaltet wurde, vom dem entsprechenden Seitensensor 50 gar nicht mehr gesehen wurden beziehungsweise gar nicht mehr detektierbar sind. Das ist beispielsweise der Fall, wenn sich die seitlich am Fahrzeug 10 vorhandenen Objekte 40 nach dem Widereinschalten der Zündung nicht mehr in dem von dem Sensor 50 erfassbaren Fahrzeugumgebungsbereich 70 befinden.

Neben der voranstehenden schriftlichen Offenbarung wird hiermit zur weiteren Offenbarung der Erfindung ergänzend explizit auf die Darstellung in den Figuren Bezug genommen.

## Patentansprüche

1. Verfahren zur Erfassung des Umfeldes eines Fahrzeuges (10), bei dem die Objektdaten der mittels eines Umfeldsensors (50, 51) während der Vorbeifahrt (30) des Fahrzeuges (10) detektierten Objekte (40) in einem ersten Steuergerät (60) erfasst werden, **dadurch gekennzeichnet, dass** die erfassten Objektdaten in vorbestimmten Zyklen an ein zweites Steuergerät (110) übertragen werden, wobei die zuletzt erfassten Objektdaten zumindest beim Abschalten des ersten Steuergerätes (60) in dem zweiten Steuergerät (110) nichtflüchtig gespeichert werden, beim Einschalten der Zündung des Fahrzeuges (10) zurück an das erste Steuergerät (60) übertragen und von diesem zur Erfassung des nach dem Einschalten der Zündung aktuell vorliegenden Fahrzeugumfeldes ausgewertet werden, wobei bei Vorliegen einer einen Schwellenwert überschreitenden Zeitdauer zwischen dem Aus- und Einschalten der Zündung die von dem zweiten Steuergerät (110) nach dem Einschalten der Zündung an das erste Steuergerät (60) zurück übertragenen Objektdaten nicht mehr zur Erfassung des aktuellen Fahrzeugumfeldes verwendet werden und/oder eine Warnung an den Fahrer ausgegeben wird.

2. Verfahren nach Anspruch 1, **dadurch gekennzeichnet, dass** beim Vorliegen einer einen vorbestimmten zweiten Schwellenwert überschreitenden Zeitdauer, in der keine Objektdaten von dem ersten Steuergerät (60) auf das zweite Steuergerät (110) übertragen werden, und/oder anhand eines beim Abschalten des ersten Steuergerätes (60) erzeugten Signals ein Abschalten des ersten Steuergeräts (60) durch das zweite Steuergerät (110) erkannt wird.

3. Verfahren nach einem der vorhergehenden Ansprüche, **dadurch gekennzeichnet, dass** von dem zweiten Steuergerät (110) nach Einschalten der Zündung an das erste Steuergerät (60) zurück übertragene Daten, die Objekte betreffen, die aufgrund ihrer berechneten Position mittels des Umfelderfassungssensors detektierbar sein sollten aber nach dem Einschalten der Zündung nicht mehr detektierbar sind, verworfen werden.

4. Vorrichtung zur Erfassung des Umfeldes eines Fahrzeuges (10) zum Durchführen des Verfahrens nach einem der vorhergehenden Ansprüchen, **gekennzeichnet durch** mindestens einen Umfeldsensor (50, 51) zum Detektieren von Objekten (40), ein erstes Steuergerät (60), das dazu ausgebildet ist, die Objektdaten der mittels des Umfeldsensors (50, 51) detektierten Objekte (40) zu erfassen und in vorbestimmten Zyklen an ein zweites Steuergerät (110) zu übertragen, das dazu ausgebildet ist, die von dem ersten Steuergerät (60) zuletzt erfassten Objektdaten beim Abschalten des ersten Steuergerätes (60) nichtflüchtig zu speichern und beim Einschalten der Zündung des Fahrzeuges (10) zurück an das erste Steuergerät (60) zu übertragen, wobei das erste Steuergerät (60) weiter dazu ausgebildet ist, die von dem zweiten Steuergerät (110) beim Einschalten der Zündung zurück übertragenen Objektdaten zur Erfassung des nach dem Einschalten der Zündung vorliegenden aktuellen Fahrzeugumfeldes auszuwerten, wobei das erste Steuergerät (60) dazu ausgebildet ist, beim Vorliegen einer einen Schwellenwert überschreitenden Zeitdauer zwischen dem Aus- und Einschalten der Zündung, die von dem zweiten Steuergerät (110) nach Einschalten der Zündung des Fahrzeuges (10) an das erste Steuergerät (60) zurück übertragenen Objektdaten zur Erfassung des aktuellen Fahrzeugumfeldes nicht mehr zu verwenden und/oder ein Signal zur Erzeugung einer Warnung an den Fahrer des Fahrzeuges (10) auszugeben.

5. Vorrichtung nach Anspruch 4, **dadurch gekennzeichnet, dass** das zweite Steuergerät (110) dazu ausgebildet ist, beim Vorliegen einer einen vorbestimmten zweiten Schwellenwert überschreitenden Zeitdauer, innerhalb der keine von dem ersten Steuergerät (60) an das zweite Steuergerät (110) übertragenen Objektdaten empfangen werden, und/oder anhand eines beim Abschalten des ersten Steuergerätes (60) erzeugten Signals ein Abschalten des ersten Steuergeräts (60) zu erkennen.

6. Vorrichtung nach einem der Ansprüche 4 oder 5, **dadurch gekennzeichnet, dass** das erste Steuergerät (60) weiter dazu ausgebildet ist, die von dem zweiten Steuergerät (110) nach Einschalten der Zündung an das erste Steuergerät (60) zurück übertragenen Daten, die Objekte betreffen, die aufgrund ihrer berechneten Position mittels des Umfelderfassungssensors (50, 51) detektierbar sein sollten aber nach dem Einschalten der Zündung nicht mehr detektierbar sind, zu verwerfen.

7. Fahrzeugassistenzsystem, insbesondere Flankenschutzsystem (20), mit einer Vorrichtung nach einem der Ansprüche 4 bis 6.

## Claims

1. Method for detecting the surroundings of a vehicle (10), in which the object data of the objects (40) detected by means of a surroundings sensor (50, 51) as the vehicle (10) travels past (30) is detected in a first control device (60), **characterized in that** the detected object data is transmitted in predetermined cycles to a second control device (110), wherein the last detected object data is stored in a non-volatile manner in the second control device (110), at least when the first control device (60) is switched off, is transmitted back to the first control device (60) when the ignition of the vehicle (10) is switched on and is evaluated by the said first control device (60) in order to detect the up-to-date vehicle surroundings that are present after the ignition is switched on, wherein, if there is a time period between switching the ignition off and on which exceeds a threshold value, the object data transmitted back from the second control device (110) to the first control device (60) after the ignition is switched on is no longer used to detect the up-to-date vehicle surroundings and/or a warning is output to the driver.

2. Method according to Claim 1, **characterized in that** if there is a time period which exceeds a predetermined second threshold value, in which no object data is transmitted from the first control device (60) to the second control device (110), and/or by using a signal generated when the first control device (60) is switched off, the fact that the first control device (60) has been switched off is detected by the second control device (110) .

3. Method according to one of the preceding claims, **characterized in that** data transmitted back to the first control device (60) from the second control device (110) after the ignition has been switched on, which data relates to objects which are to be detectable by means of the surroundings detection sensor on the basis of their calculated position but are no longer detectable after the ignition has been switched on, is discarded.

4. Device for detecting the surroundings of a vehicle (10) for carrying out the method according to one of the preceding claims, **characterized by** at least one surroundings sensor (50, 51) for detecting objects (40), a first control device (60), which is designed to detect the object data of the object (40) detected by means of the surroundings sensor (50, 51) and to transmit the same in predetermined cycles to a second control device (110), which is designed to store the object data last detected by the first control device (60) in a non-volatile manner when the first control device (60) is switched off and to transmit the same back to the first control device (60) when the ignition of the vehicle (10) is switched on, wherein the first control device (60) is further designed to evaluate the object data transmitted back from the second control device (110) when the ignition is switched on to detect the up-to-date vehicle surroundings present after the ignition is switched on, wherein if there is a time period between switching the ignition off and on which exceeds a threshold value, the first control device (60) is designed to no longer use the object data transmitted back to the first control device (60) from the second control device (110) after the ignition of the vehicle (10) is switched on to detect the up-to-date vehicle surroundings and/or to output a signal to generate a warning to the driver of the vehicle (10).

5. Device according to Claim 4, **characterized in that** if there is a time period exceeding a predetermined second threshold value, within which no object data transmitted from the first control device (60) to the second control device (110) is received, and/or by using a signal generated when the first control device (60) is switched off, the second control device (110) is designed to detect the fact that the first control device (60) has been switched off.

6. Device according to either of Claims 4 and 5, **characterized in that** the first control device (60) is further designed to discard the data transmitted back to the first control device (60) from the second control device (110) after the ignition has been switched on, which data relates to objects which are to be detectable by means of the surroundings detection sensor (50, 51) on the basis of their calculated position but are no longer detectable after the ignition has been switched on.

7. Vehicle assistance system, in particular flank protection system (20), having a device according to one of Claims 4 to 6.

## Revendications

1. Procédé de détection de l'environnement d'un véhicule (10), dans lequel on détecte dans un premier appareil de commande (60) les données d'objet des objets (40) détectés au moyen d'un capteur d'environnement (50, 51) pendant le passage (30) du véhicule (10), **caractérisé en ce que** l'on transfère les données d'objet détectées dans des cycles prédéterminés à un deuxième appareil de commande (110), dans lequel on mémorise les dernières données d'objet détectées de manière non volatile dans le deuxième appareil de commande (110) au moins lors de la coupure du premier appareil de commande (60), on les transfère en retour au premier appareil de commande (60) lors de la mise en marche de l'allumage du véhicule (10) et on les analyse avec ce dernier afin de détecter l'environnement actuellement présent après la mise en marche de l'allumage, dans lequel, en présence d'un laps de temps dépassant une valeur de seuil entre la coupure et la mise en marche de l'allumage, on n'utilise plus les données d'objet, transférées en retour du deuxième appareil de commande (110) au premier appareil de commande (60) après la mise en marche de l'allumage, pour la détection de l'environnement actuel du véhicule et/ou on émet un avertissement pour le conducteur.

2. Procédé selon la revendication 1, **caractérisé en ce qu'**en présence d'un laps de temps dépassant une deuxième valeur de seuil prédéterminée, au cours duquel aucune donnée d'objet n'est transférée du premier appareil de commande (60) au deuxième appareil de commande (110), et/ou à l'aide d'un signal produit lors de la coupure du premier appareil de commande (60), une coupure du premier appareil de commande (60) est détectée par le deuxième appareil de commande (110).

3. Procédé selon l'une quelconque des revendications précédentes, **caractérisé en ce que** l'on rejette des données transférés en retour du deuxième appareil de commande (110) au premier appareil de commande (60) après la mise en marche de l'allumage, et qui concernent des objets qui, en raison de leur position calculée devraient être détectables au moyen du capteur de détection d'environnement mais qui ne sont plus détectables après la mise en marche de l'allumage.

4. Dispositif de détection de l'environnement d'un véhicule (10) pour la mise en œuvre du procédé selon l'une quelconque des revendications précédentes, **caractérisé par** au moins un capteur d'environnement (50, 51) pour détecter des objets (40), un premier appareil de commande (60), qui est configuré pour détecter des données d'objet des objets (40) détectés au moyen du capteur d'environnement (50, 51) et les transférer dans des cycles prédéterminés à un deuxième appareil de commande (110), qui est configuré pour mémoriser de façon non volatile, lors de la coupure du premier appareil de commande (60), les dernières données d'objet détectées par le premier appareil de commande (60) et les transférer en retour au premier appareil de commande (60) lors de la mise en marche de l'allumage du véhicule (10), dans lequel le premier appareil de commande (60) est en outre configuré pour analyser les données d'objet transférées en retour par le deuxième appareil de commande (110) lors de la mise en marche de l'allumage afin de détecter l'environnement actuel du véhicule présent après la mise en marche de l'allumage, dans lequel le premier appareil de commande (60) est configuré pour, en présence d'un laps de temps dépassant une valeur de seuil entre la coupure et la mise en marche de l'allumage, ne plus utiliser les données d'objet transférées en retour du deuxième appareil de commande (110) au premier appareil de commande (60) après la mise en marche de l'allumage du véhicule (10) pour la détection de l'environnement actuel du véhicule, et/ou pour émettre un signal pour l'envoi d'un avertissement au conducteur du véhicule (10).

5. Dispositif selon la revendication 4, **caractérisé en ce que** le deuxième appareil de commande (110) est configuré pour détecter une coupure du premier appareil de commande (60), en présence d'un laps de temps dépassant une deuxième valeur de seuil prédéterminée à l'intérieur duquel aucune donnée d'objet transférée du premier appareil de commande (60) au deuxième appareil de commande (110) n'est reçue, et/ou à l'aide d'un signal produit lors de la coupure du premier appareil de commande (60).

6. Dispositif selon une des revendications 4 ou 5, **caractérisé en ce que** le premier appareil de commande (60) est en outre configuré pour rejeter les données transférées en retour du deuxième appareil de commande (110) au premier appareil de commande (60) après la mise en marche de l'allumage, qui concernent des objets qui devraient être détectables au moyen du capteur de détection d'environnement (50, 51) en raison de leur position calculée mais qui ne sont plus détectables après la mise en marche de l'allumage.

7. Système d'assistance de véhicule, en particulier système de protection des flancs (20), avec un dispositif selon l'une quelconque des revendications 4 à 6.
